Europäisches Patentamt

European Patent Office

Office européen des brevets

(19)

(11) Veröffentlichungsnummer: **0 399 318**
**A1**

## (12) EUROPÄISCHE PATENTANMELDUNG

(21) Anmeldenummer: **90108963.1**

(22) Anmeldetag: **12.05.90**

(51) Int. Cl.5: **G01N 30/48, G01N 33/72**

(30) Priorität: **24.05.89 DE 3916867**

(43) Veröffentlichungstag der Anmeldung:
**28.11.90 Patentblatt 90/48**

(84) Benannte Vertragsstaaten:
**BE CH DE FR GB IT LI NL**

(71) Anmelder: **MERCK PATENT GESELLSCHAFT MIT BESCHRÄNKTER HAFTUNG**
**Frankfurter Strasse 250 Postfach 4119**
**D-6100 Darmstadt(DE)**

(72) Erfinder: **Boos, Karl-Siegfried, Prof.-Dr.**
**Sommerau 6a**
**D-4790 Paderborn/Marienloh(DE)**
Erfinder: **Wilmers, Bernd**
**Friedenstrasse 30**
**D-5780 Bestwig(DE)**
Erfinder: **Sauerbrey, Richard**
**Hasselbach 4**
**D-3512 Reinhardshagen(DE)**

(54) **Modifizierte chromatographische Trägermaterialien.**

(57) Die Erfindung betrifft ein mit 3-[N-(3-Boronophenyl)-amino]-2-hydroxypropyloxy-Gruppen modifiziertes chromatographisches Trägermaterial auf Basis von epoxidhaltigen Vinyl-Copolymeren sowie ein Verfahren zur Isolierung, Auftrennung und zum Nachweis von glykosylierten Proteinen mit diesem Trägermaterial unter hochleistungsaffinitätschromatographischen Bedingungen.

EP 0 399 318 A1

## Modifizierte chromatographische Trägermaterialien

Die Erfindung betrifft ein mit 3-[N-(3-Boronophenyl)-amino]-2-hydroxypropyloxy-Gruppen modifiziertes chromatographisches Trägermaterial auf Basis von epoxidhaltigen Vinyl-Copolymeren sowie ein Verfahren zur Isolierung, Auftrennung und zum Nachweis von enzymatisch und nicht-enzymatisch glykosylierten Proteinen mittels Gelpermeations-und/oder Affinitätschromatographie unter hochleistungsflüssigkeitschromatographischen Bedingungen, bei welchem dieser modifiziert Träger eingesetzt wird.

Zur Bestimmung glykosylierter Proteine (z.B. Hämoglobin, Albumin) finden Ionenaustausch-chromatographische oder Boronsäure-affinitätschromatographische Verfahren Anwendung.

Nachteile der Ionenaustausch-chromatographischen Bestimmung der glykosylierten Hämoglobine sind die hohe Temperaturempfindlichkeit der Trennung, die speziell bei der Mikrosäulen-Technik zu falschen Werten führt, die pH-Empfindlichkeit und chromatographische Interferenzen durch am ß-N-Terminus carbamylierte oder acetylierte Hämoglobine.

Bei der Affinitätschromatographie kann vorteilhafterweise die Gesamtfraktion der glykosylierten Hämoglobine bestimmt werden und nicht nur einzelne Subfraktionen wie bei der Ionenaustauschchromatographie.

Als Affinitätsligand wird 3-Aminophenylboronsäure verwendet.

Die glykosylierten Proteine werden unter alkalischen Bedingungen unter Ausbildung eines cyclischen Esters kovalent an die mit 3-Aminophenylboronsäure modifizierte Affinitätsphase gebunden und von den nicht-glykosylierten Proteinen abgetrennt.

Eluiert werden die gebundenen Proteine von der Affinitätsphase durch einen in einem alkalischen Puffer gelösten Gegenliganden (z.B. Sorbitol) oder durch saure Puffer, die die Hydrolyse der Ester bewirken.

Die bisher verwendeten affinitäts-chromatographischen Verfahren zur Quantifizierung glykosylierter Proteine benutzen mit 3-Aminophenylboronsäure modifizierte und in Mikrosäulen gepackte Softgele. Der Affinitätsligand ist dabei an Gele wie Sepharose$^R$ oder Agarose$^R$ immobilisiert. Bei diesen Mikrosäulen-Tests hat sich jedoch herausgestellt, daß diese Verfahren nur eine mangelhafte Isolierung, Auftrennung und Quantifizierung von glykosylierten Proteinen erlauben.

Gründe hierfür sind insbesondere die geringe mechanische und chemische Stabilität der Trägermaterialien, die Immobilisierung des Affinitätsliganden über eine hydrolyseempfindliche Säureamidbindung und die begrenzte Wiederverwendung (ca. 10 Analysen pro Säule). Weiterhin entstehen durch uneinheitliche Säulenpackungen bedingt stark schwankende Flußraten und Bindungskapazitäten. Dadurch resultiert eine geringe analytische Präzision, was durch die Werte für die relativen Variationskoeffizienten, die bis zu 10 % betragen, deutlich wird.

Ferner sind diese Verfahren zeitaufwendig, arbeitsintensiv und nur teilautomatisierbar.

Verfahren unter hochleistungsflüssigkeitschromatographischen Bedingungen sind bisher noch nicht bekannt, da ein Mangel an geeigneten, druckstabilen, modifizierbaren Polymerphasen, die mit Hämoglobinmolekülen nur sehr geringe, unspezifische Wechselwirkungen ausüben, besteht.

Der Erfindung lag daher die Aufgabe zugrunde, ein chromatographisches Trägermaterial und ein entsprechendes Verfahren zu finden, die die zuvor aufgeführten Nachteile nicht aufweisen und eine vollautomatische Isolierung, Auftrennung und den quantitativen Nachweis von glykosylierten Proteinen unter hochleistungsflüssigkeitschromatographischen (HPLC)-Bedingungen ermöglichen.

Überraschenderweise wurde nun gefunden, daß die über eine Aminbindung erfolgte Immobilisierung von 3-Aminophenylboronsäure an ein epoxidhaltiges Vinyl-Copolymeres, vorzugsweise an ein Copolymerisat aus Methacrylamid, N,N'-Methylen-bis-methacrylamid sowie Allyl-glycidyl-ether und/oder Glycidylmethacrylat, ein chromatographisches Trägermaterial liefert, das hervorragend für die Hochleistungsaffinitätschromatographie und insbesondere zur Isolierung, Auftrennung und zum Nachweis glykosylierter Proteine geeignet ist.

Gegenstand der Erfindung ist daher ein mit 3-[N-(3-Boronophenyl)-amino]-2-hydroxypropyloxy-Gruppen modifiziertes chromatographisches Trägermaterial auf Basis von epoxidhaltigen Vinyl-Coplymeren.

Gegenstand der Erfindung ist auch ein Verfahren zur chromatographischen Trennung von Substanzgemischen durch Hochleistungsaffinitätschromatographie sowie ein Verfahren zur Isolierung, Auftrennung und zum Nachweis von glykosylierten Proteinen durch Affinitätschromatographie, bei welchem als chromatographisches Trägermaterial ein mit 3-[N-(3-Boronophenyl)-amino]-2-hydroxypropyloxy-Gruppen modifiziertes Material auf Basis von epoxidhaltigen Vinyl-Copolymeren unter HPLC-Bedingungen eingesetzt wird.

Als Basismaterialien für die erfindungsgemäßen Träger kommen alle makroporösen, chemisch und mechanisch stabilen Vinyl-Copolymere, die Epoxidgruppen enthalten, in Frage.

Die Copolymeren können ganz allgemein aus radikalisch polymerisierbaren Vinylverbindungen hergestellt werden. Unter Vinylverbindungen werden hier allgemein alle Verbindungen mit mindestens einer Doppelbindung verstanden. Vorzugsweise werden die Polymerisate aus Monomeren auf der Basis von Acrylsäure - und/oder Methacrylsäurederivaten hergestellt.

Vorzugsweise werden 2 bis 3 verschiedene Vinylmonomere, wobei ein Vinylmonomer eine Epoxidgruppe enthält, wie z.B. Glycidylacrylat, Glycidylmethacrylat oder Allylglycidyl-ether, und die restlichen Monomere aus den allgemein für diese Zwecke üblichen und bekannten Monomeren ausgewählt werden, copolymerisiert. Vorzugsweise hat ein Monomeres zwei polymerisationsfähige Gruppen und dient daher als Vernetzer. Der Anteil der einzelnen Monomeren kann in weiten Grenzen variiert werden. Auch der Anteil der epoxidhaltigen Monomeren kann aus einem weiten Bereich ausgewählt werden. In Abhängigkeit von den konkret verwendeten Monomeren und der gewünschten Hydrophilie des Gesamtpolymerisats kann der Anteil des Vernetzers zwischen 0 und 50 Gew.%, vorzugsweise zwischen 0,2 und 15 Gew.%, der Anteil der epoxidhaltigen Monomeren zwischen 0,1 und 99,9 Gew.%, vorzugsweise zwischen 1 und 50 Gew.%, und der Anteil der restlichen Monomeren bis zu 95 Gew.%, vorzugsweise bis zu 60 Gew.% betragen, bezogen jeweils auf das Gesamtpolymerisat.

Ganz besonders bevorzugt ist ein Basismaterial, das aus den Monomeren Methacrylamid, N,N'-Methylen-bis-methacrylamid sowie Allyl-glycidyl-ether und/oder Glycidylmethacryl aufgebaut ist (im Handel erhältlich als Eupergit® C, Fa. Röhm Pharma GmbH).

Aktiviert ist diese Matrix mit 800 bis 1000 $\mu$mol Epoxidgruppen gro Gramm Gel.

Auf dieses Material können 300 bis 400 $\mu$mol 3-Aminophenylboronsäure pro Gramm Gel immobilisiert werden, ein Wert, der mit bisher bekannten Matrices nur schwer zu erreichen ist.

Die Herstellung des erfindungsgemäßen mit 3-[N-(3-Boronophenyl)-amino]-2-hydroxypropyloxy-Gruppen modifizierten Polymerisats, das vorzugsweise als Perlpolymerisat vorliegt, erfolgt in der Weise, daß man das mit Epoxygruppen aktivierte Perlpolymerisat mit einer wäßrigen Lösung von 3-Aminophenylboronsäure-hydrochlorid reagieren läßt und anschließend die überschüssigen Epoxidgruppen sauer hydrolysiert.

Vorzugsweise wird die Immobilisierung in bidestilliertem Wasser bei einem pH-Wert von 10-11 und Temperaturen von ca. 40-70 °C durchgeführt. Die Reaktionsdauer beträgt vorzugsweise zwischen 20 und 30 Stunden.

Die saure Hydrolyse der überschüssigen Epoxidgruppen erfolgt vorzugsweise in 1 N HC1 bei 70-90 °C.

Die Oberflächenbelegung mit dem Affinitätsliganden liegt im Bereich von 0,3 bis 0,4 mmol, vorzugsweise 0,35 mmol pro g Trockengewicht des Trägermaterials.

Das erfindungsgemäße Trägermaterial eignet sich hervorragend für die Gelpermeationschromatographie und zur Affinitätschromatographie unter HPLC-Bedingungen. Diese kombinierten Eigenschaften erlauben die gruppen-spezifische Isolierung und Auftrennung von glykosylierten Proteinen unter Drucken von bis zu 150 bar.

Das erfindungsgemäße Verfahren zum Auftrennen und zum Nachweis von glykosylierten Proteinen wird mit einem hochleistungsflüssigkeitschromatographischen (HPLC)-Analysensystem durchgeführt, das aus einer HPLC-Pumpe, einem UV/VIS-Detektor, einem Integrator und einer mit dem erfindungsgemäßen Trägermaterial gepackten Trennsäule besteht. Die Trennsäulen weisen übliche Größen auf und haben vorzugsweise eine Länge von 30 bis 300 mm und einen Innendurchmesser von 4 bis 20 mm.

Ein Analysenzyklus zur Isolierung, Auftrennung und zum Nachweis von glykosylierten Proteinen setzt sich aus vier Teilschritten zusammen.

1. Die Probe wird auf die mit einem alkalischen Puffer äquilibrierte Affinitätssäule injiziert, und es erfolgt eine kovalente, chemoselektive Bindung der glykosylierten Proteine an den Affinitätsliganden.

2. Die nicht-glykosylierten Proteine und die Restmatrix werden quantitativ von der Affinitätssäule eluiert.

3. Die glykosylierten Proteine werden quantitativ von der Affinitätssäule durch Zugabe eines Gegenliganden oder durch Erniedrigung des pH-Wertes der mobilen Phase eluiert.

4. Anschließend wird die Affinitätssäule rekonditioniert.

Zur vollständigen Automation des Verfahrens kann noch ein Probengeber eingesetzt werden.

Die Vorteile des erfindungsgemäßen, affinitäts-chromatographischen Verfahrens liegen darin, daß es unter HPLC-Bedingungen durchgeführt werden kann, chemoselektiv für glykosylierte Proteine ist, eine sehr hohe Anzahl von Analysenzyklen pro Affinitätssäule ermöglicht, eine hohe analytische Präzision aufweist und vollständig automatisierbar ist.

Besonders vorteilhaft ist dieses Verfahren für die quantitative Bestimmung von glykosylierten Hämoglobinen. Die glykosylierten Hämoglobine sind eine wichtige Kenngröße zur Überprüfung der Diabetes-Mellitus-Therapie. Das erfindungsgemäße Verfahren zum Nachweis von glykosylierten Hämoglobinen hat entscheidende Vorteile gegenüber den bisher bekannten, handelsüblichen Mikrosäulen-Tests.

Die Bestimmungsmethode besitzt eine Chemoselektivität für glykosylierte Hämoglobine, außerdem wird die Gesamtfraktion der glykosylierten Hämoglobine und nicht einzelne Subfraktionen erfaßt. Es tauchen keine Interferenzen durch Aldimine, Hämoglobinvarianten oder durch Nicht-Glucosemodifizierungen (Carbamylierung, Acetylierung) auf.

Das erfindungsgemäße chromatographische Material und das entsprechende Verfahren ergeben eine höhere Wiederfindungsrate und Präzision und erlauben daher auch eine bessere Differenzierung zwischen normalen und diabetischen Proben sowie eine bessere Differenzierung im diabetischen Bereich.

Beispiel 1

Herstellung des mit 3-[N-(3-Boronophenyl)-amino]-2-hydroxy-propyloxy-Gruppen modifizierten Trägermaterials

0,13 Gewichtsanteile 3-Aminophenylboronsäure-hydrochlorid werden in 10 Gewichtsanteilen bidestilliertem Wasser gelöst, der pH-Wert wird mit 10 mol/l NaOH auf 10,5 eingestellt, und unter Rühren setzt man 1 Gewichtsanteil des epoxyaktivierten Perlpolymerisats aus Methacrylamid, N,N'-Methylen-bis-methacrylamid sowie Allyl-glycidyl-ether und/oder Glycidylmethacrylat (Eupergit® C, Fa. Röhm Pharma GmbH) zu. Die Umsetzung erfolgt über ca. 24 Stunden bei 55 °C. Das erhaltene Material wird abfiltriert, nacheinander 4mal mit je 10 Gewichtsanteilen bidestilliertem Wasser und 10 Gewichtsanteilen Methanol gewaschen und getrocknet.

Zur sauren Hydrolyse der nicht-umgesetzten Epoxygruppen werden anschließend 20 Gewichtsanteile 1 mol/l HCl mit 1 Gewichtsanteil des modifizierten Trägermaterials unter Rühren versetzt. Die Umsetzung erfolgt über 2 Stunden bei 80 °C. Das erhaltene Material wird abfiltriert, nacheinander 4mal mit je 10 Gewichtsanteilen bidestilliertem Wasser und Methanol gewaschen und getrocknet.

Die Oberflächenbelegung mit dem Affinitätsliganden liegt bei 0,35 mmol pro g Trockengewicht des Trägermaterials.

Das Material wird vorzugsweise bei Temperaturen unterhalb von 10 °C gelagert.

Beispiel 2

Quantitative Bestimmung von glykosyliertem Hämoglobin

Die Bestimmung wird mit einem HPLC-Analysensystem durchgeführt, das aus einem automatischen Probengeber (Merck-Hitachi, 655 A-40), einer HPLC-Pumpe (Merck-Hitachi, L-6200), einem UV/VIS-Detektor (Merck-Hitachi, L-4200), einem Integrator (Merck-Hitachi, D-2000) und einer mit dem erfindungsgemäßen Trägermaterial, hergestellt nach Beispiel 1, gepackten Trennsäule (Maße: 30 mm x 4 mm) besteht.

Der vollautomatisierte Analysenzyklus setzt sich aus 4 Teilschritten zusammen:

1. Injektion von 3 $\mu$l eines Vollbluthämolysats auf die Affinitätssäule, die mit einem alkalischen Puffer (0,1 M CH$_3$COONH$_4$; 0,05 M MgCl$_2$; pH 9,5; 10 % (v/v) Methanol) äquilibriert ist.

2. Quantitative Elution der nicht-glykosylierten Hämoglobine und der Restmatrix mit dem unter 1. angegebenen Puffer bei einer Flußrate von 0,4 ml/min und einer Spülzeit von 3 Minuten.

3. Quantitative Elution der glykosylierten Hämoglobine mit einem sauren Puffer (0,1 M CH$_3$COOH; pH 3,0; eingestellt mit NH$_3$) bei einer Flußrate von 0,4 ml/min innerhalb von 7 Minuten und Detektion des glykosylierten Hämoglobins bei 414 nm.

4. Rekonditionierung der Affinitätssäule durch den unter 1. angegebenen Puffer bei einer Flußrate von 1 ml/min innerhalb von 5 Minuten.

Nach der Injektion der Probe durch den Autosampler wird das Analysenprogramm gestartet und die Affinitätsphase bei einer Flußrate von 0,4 ml/min für 3 Minuten mit dem alkalischen Acetatpuffer gespült.

Anschließend erfolgt das Umschalten auf die Essigsäure, um die glykosylierten Hämoglobine von der Säule zu eluieren.

Nach 10 Minuten Analysendauer erfolgt bei einer erhöhten Flußrate von 1,0 ml/min zur Äquilibrierung der Affinitätsphase das Rückschalten auf den alkalischen Puffer. Nach 15 Minuten kann eine erneute Injektion eines Hämolysats erfolgen.

Insgesamt erlaubt die präparierte Affinitätsphase die Bestimmung von mehr als 1000 Hämoglobinproben pro Säule, ein Wert, der mit der Mikrosäulentechnik nicht erreicht werden kann.

In der folgenden Tabelle sind Analysenergebnisse zusammengefaßt, die auch die Präzision des Verfahrens belegen.

| Bestimmung %Hb$_{glc}$ Serie | | | Retentionszeit Hb$_{glc}$ Serie | | |
|---|---|---|---|---|---|
| $\overline{x}$ | $\sigma$ | VK (%) | $\overline{x}$ | $\sigma$ | VK (%) |
| 7,89 | 0,19 | 2,4 | 7,90 | 0,08 | 1,1 |
| 11,09 | 0,35 | 3,2 | 7,80 | 0,08 | 1,0 |
| 14,35 | 0,34 | 2,4 | 7,75 | 0,08 | 1,0 |
| 20,26 | 0,59 | 2,9 | 7,68 | 0,09 | 1,2 |

| Bestimmung %Hb$_{glc}$ Tag/Tag | | | Retentionszeit Hb$_{glc}$ Tag/Tag | | |
|---|---|---|---|---|---|
| $\overline{x}$ | $\sigma$ | VK (%) | $\overline{x}$ | $\sigma$ | VK (%) |
| 6,48 | 0,29 | 4,5 | 7,93 | 0,13 | 1,6 |
| 17,43 | 0,32 | 1,8 | 7,80 | 0,08 | 1,1 |
| $\overline{x}$: Mittelwert | | | | | |
| $\sigma$: Standardabweichung | | | | | |
| VK (%): relativer Variationskoeffizient | | | | | |
| Serie: n = 12 | | | | | |
| Tag/Tag: n = 10 | | | | | |

Diese Tabelle zeigt, daß das erfindungsgemäße hochleistungsaffinitätschromatographische Verfahren mit dem erfindungsgemäßem chromatographischem Trägermaterial über eine hervorragende Präzision verfügt, sowohl was die Bestimmung des glykosylierten Hämoglobinanteils als auch die Retentionszeiten der Hb$_{glc}$-Fraktion anbelangt. In der Serie sind die Variationskoeffizienten für die Hb$_{glc}$-Bestimmung $\leq$ 3,2 % und weitgehend unabhängig von dem glykosylierten Anteil in den Proben.

In der Tag/Tag-Analyse sind die Variationskoeffizienten $\leq$ 4,5 %. Bei den Retentionszeiten liegen die Variationskoeffizienten sowohl für die Serie als auch für die Tag/Tag-Analyse unter 1,7 %.

Das Verfahren weist gegenüber den bislang eingesetzten affinitätschromatographischen Verfahren eine vollständige Automatisierung der Analyse, ein kürzere Analysenzeit, eine um den Faktor > 100 erhöhte Anzahl an Analysen pro Säulenpackung und eine um den Faktor 2 bessere Präzision in der Serie und in der Tag/Tag-Analyse auf.


## Ansprüche

1. Mit 3-[N-(3-Boronophenyl)-amino]-2-hydroxypropyloxyGruppen modifiziertes chromatographisches Trägermaterial auf Basis von epoxidhaltigen Vinyl-Copolymeren.

2. Trägermaterial nach Anspruch 1, dadurch gekennzeichnet, daß das Vinyl-Copolymere aus den Monomeren Methacrylamid, N,N´-Methylen-bis-methacrylamid sowie Allyl-glycidyl-ether und/oder Glycidylmethacrylat hergestellt wird.

3. Verfahren zur chromatographischen Trennung von Substanzgemischen durch Hochleistungsaffinitätschromatographie, dadurch gekennzeichnet, daß als chromatographisches Trägermaterial ein modifiziertes Material nach den Ansprüchen 1 oder 2 eingesetzt wird.

4. Verfahren zur Isolierung, Auftrennung und zum Nachweis von glykosylierten Proteinen durch Affinitätschromatographie, dadurch gekennzeichnet, daß als chromatographisches Trägermaterial ein modifiziertes Material nach den Ansprüchen 1 oder 2 unter hochleistungsflussigkeitschromatographischen Bedingungen eingesetzt wird.

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int Cl⁵) |
|---|---|---|---|
| X,Y | P.D.G. DEAN, W.S.JOHNSON & F. A.MIDDLE "Affinity chromatography: A practical approach" 1985 IRL PRESS, Oxford Washington D.C. ' <br> * Seite 19, 2.-4. Absatz; Seite 21, 4. Absatz * | 1-3 | G 01 N 30/48 <br> G 01 N 33/72 |
| Y | * insbesonders Seite 83, 3. Absatz; Seite 133, 2.,4. Absatz * <br> ---- | 4 | |

RECHERCHIERTE SACHGEBIETE (Int Cl⁵)

G 01 N

Der vorliegende Recherchenbericht wurde für alle Patentansprüche erstellt.

| Recherchenort | Abschlußdatum der Recherche | Prüfer |
|---|---|---|
| WIEN | 27-06-1990 | TENGLER |